# EUROPEAN PATENT APPLICATION

(11) **EP 1 985 256 A1**
(43) Date of publication of application: **29.10.2008**
(21) Application number: 06708878.1
(22) Date of filing: 16.02.2006
(51) Int. Cl.: A61C 8/00

(54) **DENTAL IMPLANT ASSEMBLY AND DEVICE FOR TAKING A DENTAL IMPRESSION**

(71) Applicant: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(72) Inventor: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(74) Representative: Carpintero Lopez, Francisco
(86) International application number: PCT/ES2006/000068
(87) International publication number: WO 2007/093648

(57) **Abstract**

The invention relates to an assembly formed by a dental implant (1) formed by a threaded body (2) extending into a head (3) provided with a boss (4) which can be fitted in a cavity (13) made in a distal part (11) of a dental impression-taking device (10). The cavity (13) has projections (12) which can be inserted in recesses (14) of the boss (4), a tongue and groove coupling being generated upon joining in an aligned manner the two parts: a male part comprising said boss (4) preferably configured in the implant (1) and a female part formed by the cavity (13) adapted to such male part. Another alternative embodiment is to configure the male part in the dental impression-taking device (10). The projections (12) and recesses (14) are useful for retaining the joining with a simple clamping between the two parts, allowing to immediately take an impression in an extremely easy and quick manner.

## Description

### OBJECT OF THE INVENTION

The present invention is applicable in the restorative dentistry field, in the arrangement of a dental implant of the type replacing missing teeth which can be coupled to a device for recording its position inside the patient's mouth by means of a suitable material for the impression-taking step known by maxillary restoration specialists.

The object of the invention is therefore to provide a dental implant and impression-taking device assembly which allows carrying out a quick and simple recording for the immediate transfer to a model for preparing a dental prosthesis.

### BACKGROUND OF THE INVENTION

Dental implantology techniques are currently widely used, their use and acceptance by consumers being increasingly frequent. The common practice is to replace teeth by means of inserting and fixing a dental implant in the bone tissue (such as the tooth root), being useful as a base for subsequently fixing the corresponding dental prosthesis.

In a first step of the operation, the dentist performs an osteotomy, drilling a hole in the maxilla or mandible in which the dental implant is introduced for its subsequent integration with the bone tissue. A subsequent step consists of taking an impression or mold to record the position and orientation of the dental implant inside the patient's mouth. This recording is carried out using materials such as silicone, an alginate, a hydrocolloid, etc. and the mold is transferred to a plaster model in a subsequent step so that the laboratory technician can prepare a temporary or permanent prosthesis.

The impression-taking process is very important to achieve a tooth restoration which satisfies the functional and aesthetic requirements demanded by patients. To that end, the mold taken must very precisely reflect the position and orientation of the dental implant placed in the first step.

In order to carry out said recording or mold on the implant, there are several impression-taking tools or devices known by doctors. The impression systems described in US patent 6,068,478 and international patent application PCT WO 03/077789 must be mentioned among the existing solutions. The two mentioned inventions relate to elements which are screwed in the dental implant so as to obtain the mold with cement or another impression material.

The main drawback of the impression-taking devices screwed to the dental implant is that they hinder the task because the screwing and unscrewing makes such task slower, apart from the fact that it entails the use of screws or other auxiliary components which must penetrate the implant itself so as to fix it with the impression-taking device in question.

### DESCRIPTION OF THE INVENTION

The present invention solves the drawbacks set forth above in each of the aspects discussed, allowing a quick and simple recording of the position of a dental implant in a mandible so as to immediately transfer it to a work model from which a final prosthesis will be prepared, forming a dental implant and impression-taking device assembly with a considerably simple structure compared to the known background.

More specifically, the dental implant and impression-taking device assembly is coupled by a simple "click" or tongue and groove mechanism, because both components are configured to be inserted one in the other, further incorporating retaining means ensuring said coupling upon joining the two components of the assembly, in which one component acts as a male part and the other component acts as a female part.

The dental implant of the assembly of the invention is structured from a single body of revolution formed by a head, which in one preferred embodiment is formed by a cylindrical portion extended at the lower part in a portion with an inverted frustoconical configuration, extending at the lower part into a preferably cylindrical body with an outer thread intended to be embedded in the honeycomb hole made in the patient. The head of the implant is especially configured to be coupled to the impression-taking device proposed below.

The impression-taking device has a structure, which is preferably made of plastic, formed from an also preferably cylindrical central body in which there is defined a part designed to retain the impression material, which will be referred to as proximal part, and an opposite part, the distal part, adapted for the fitting with the described dental implant.

One embodiment of the invention contemplates that the male part is in the head of the dental implant and the female part is in the distal part of the dental impression-taking device. However, the reverse embodiment is also possible, constructing the dental impression-taking device with the male part and the female part configured in the dental implant.

In a particular embodiment, the male part comprises a boss configured by revolution, whereas the female part comprises a cavity adapted in shape and dimension to said boss. Another embodiment option consists of a male part additionally comprising the cylindrical portion of the head of the implant, which head is joined at its upper base to the boss. The shape of the cavity forming the female part is adapted in each possible embodiment to the configuration of the male part, such that the insertion is perfect. Furthermore, retaining means in said female part acting in collaboration with complementary retaining means provided in the male part make the joining between the two parts stable.

The boss acting as the male part in the coupling with the cavity can have a circular or polygonal section, the hexagonal section being preferred.

The retaining means consist of a plurality of projections in the female part, the profile of which projections can be polygonal, semicircular or with a circular sector or other shapes to which corresponding recesses are adapted, which recesses form the complementary retaining means of the male part. Said retaining means or projections are made in at least one of the inner walls of the cavity, preferably in each and every one of such walls when the section of the cavity is hexagonal or another polygon. The complementary retaining means or recesses can be configured in at least one outer wall of the boss, preferable in each and every one of such walls when the section of the cavity is hexagonal or another polygon or the outer wall of the cylindrical portion of the head of the dental implant. According to another alternative embodiment, a cylindrical portion from the upper base of which there emerges a boss acting as male part can be constructed in the impression-taking device, whereas the cavity adapted to these boss shapes plus the cylindrical portion is in the dental implant. A final possible embodiment is that the retaining projections are in the peripheral surface of the cavity, surrounding the opening thereof, whereas the retaining recesses are in the upper base of said cylindrical portion included as the male part of the assembly.

Thanks to such retaining mechanism, when the male part enters the cavity, the projections connect with the recesses, achieving a stable fixing in the coupling of the impression-taking device with the dental implant.

In addition, the dental impression-taking device has a proximal part designed to retain the impression material. Said proximal part has a size and ergonomics adjusted to enable placing the impression-taking device in any area of the mandible in which the dental implant can be fixed, but it further has structural features preventing said device from moving vertically or rotating involuntarily inside the impression material when it is embedded in the material.

Specifically, the proximal part of the impression-taking device comprises two elements configured as discs with a larger diameter than the distal part and perpendicular to the axis of revolution of said device, although other configurations known by persons skilled in the art can also be admitted: completely circular configurations with at least one planar side face, hexagonal, octagonal configurations, etc. The discs are parallel and identical in shape and dimensions, being suitably spaced to retain the impression material therebetween and prevent their vertical movement. The discs are preferably two in number for the purpose of being able to cut one of them in the event of having a small mouth height, the most distal disc being useful for vertical retention together with side grooves provided in the distal part. According to a preferred embodiment, the proximal part has a smaller diameter than the distal part, which part can include side grooves to favor the lack of rotation of the device inside the impression material and the vertical retention as a complement, acting in collaboration with the discs of the proximal part.

### DESCRIPTION OF THE DRAWINGS

To complement the description which is being made and with the aim of aiding to better understand the features of the invention according to a preferred practical embodiment thereof, a set of drawings is attached as an integral part of said description, in which the following has been shown with an illustrative and non-limiting character:
Figure 1 shows an elevational view of the dental implant with the male coupling part according to a preferred embodiment of the assembly of the invention.
Figure 2 shows a bottom perspective view of the dental impression-taking device, with the female coupling part for the coupling to the dental implant shown in the previous figure.
Figure 3 shows a bottom perspective view of the dental implant and dental impression-taking device assembly, shown in the respective previous figures, in the position for the tongue and groove coupling according to the object of the invention.
Figure 4 shows bottom perspective views of the female part of the dental impression-taking device, showing three embodiment alternatives in detail.
Figure 5 shows a bottom perspective view of the male part of the dental implant according to a possible embodiment.
Figure 6 shows two side and front elevational views of the dental impression-taking device of the assembly object of the invention according to a preferred embodiment.

### PREFERRED EMBODIMENT OF THE INVENTION

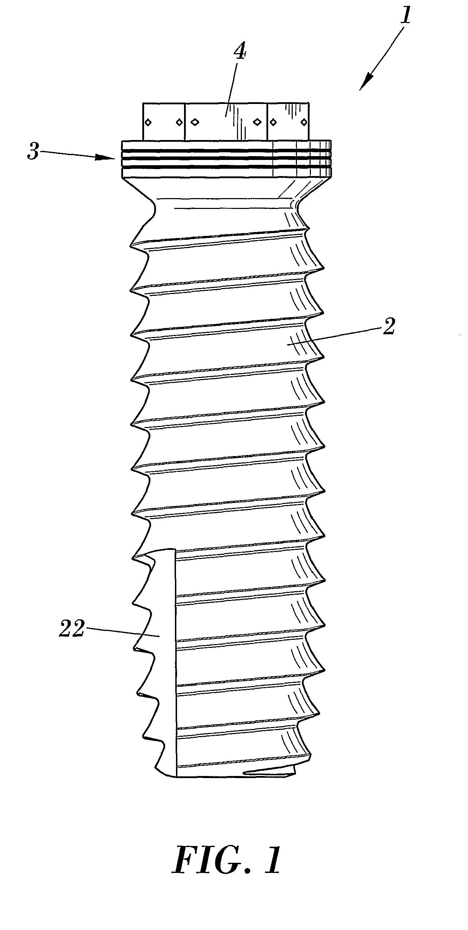

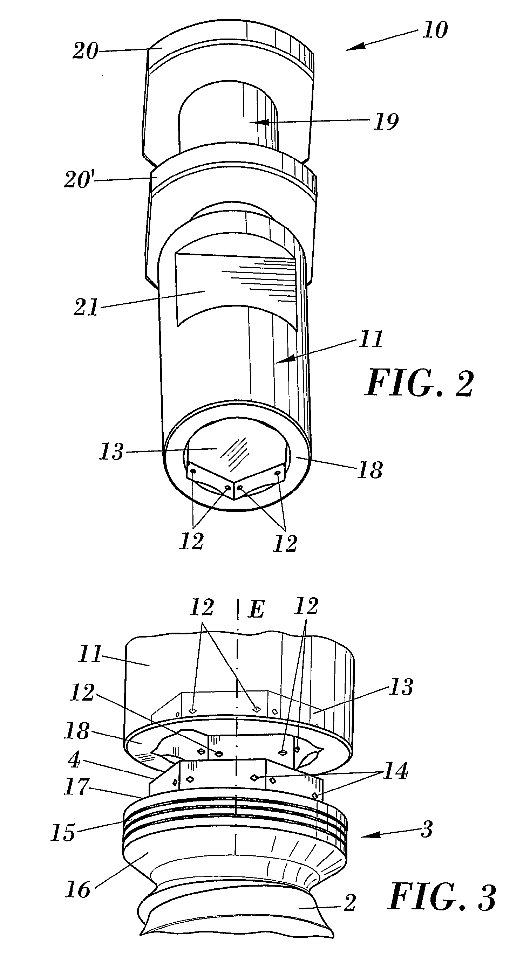

In view of the figures, an embodiment can be observed in them which consists of two parts or components: a dental implant (1) and a dental impression-taking device (10). The dental implant (1) is formed by a threaded body (2) so as to be anchored in the maxilla of a patient, extending at the upper part into a head (3), as shown in Figure 1, adapted to the coupling con with the dental impression-taking device (10) shown in Figure 2. The threaded body (2) can optionally have at the lower part on one side at least one depression (22) to facilitate the threaded insertion of the dental implant (1) into the artificial honeycomb hole previously made in the maxillary bone, which is not shown in the figures.

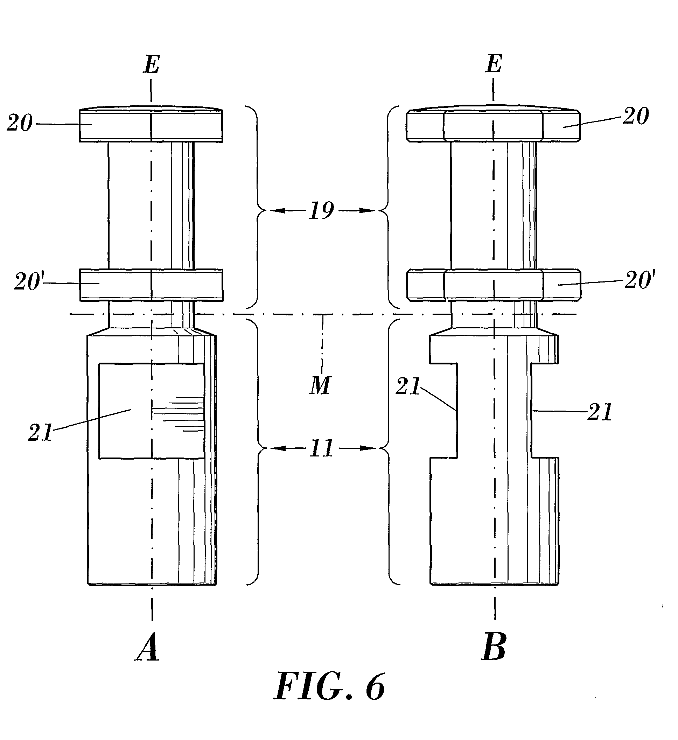

As shown in Figures 2 and 6, in the dental impression-taking device (10) there are defined two opposite parts with respect to its midline (M): a distal part (11) whereby said dental impression-taking device (10) is coupled to the dental implant (1) and a proximal part (19) intended to receive the material used to take the impression, being located inside the material used during this operation.

Such dental impression-taking device (10) is constructed as a body of revolution, preferably made of plastic, whereby both parts (11, 19) follow an axis of revolution (A), configuring in the proximal part (19) a pair of discs (20, 20') perpendicular to the axis of revolution (A), between which discs the impression material is retained such that the dental impression-taking device (10) is fixed inside said material without the possibility of being able to accidentally move vertically, which would ruin the impression taking. As shown in the mentioned Figures 2 and 6, the disks (20, 20') for retaining the impression material can be completely circular or have a planar side face, whereby achieving an anti-rotation effect for the dental impression-taking device (10) inside the material in which it is embedded. In this embodiment, the distal part (11) and the proximal part (19) have a circular section, configured from a main cylindrical body, in which the distal part (11) has a larger diameter than the proximal part (19) and the diameter of the two discs (20, 20') is in turn slightly greater than that of the distal part (11).

Considering that explained above, the dental implant (1) and the dental impression-taking device (10) are configured to be coupled to one another, aligning the assembly according to the mentioned axis (A) and opposing the head (3) of the dental implant (1) to the lower base of the distal part (11) of the dental impression-taking device (10), by a simple tongue and groove means, as indicated in Figure 3. In this case, a boss (4) emerges from the head (3), which boss preferably has a hexagonal section, forming the male part in the coupling, whereas the distal part (11) has a cavity (13) acting as the female part to receive the boss (4). According to the preferred embodiment, the cavity (13) is also hexagonal and has dimensions allowing the perfect fitting with said boss (4).

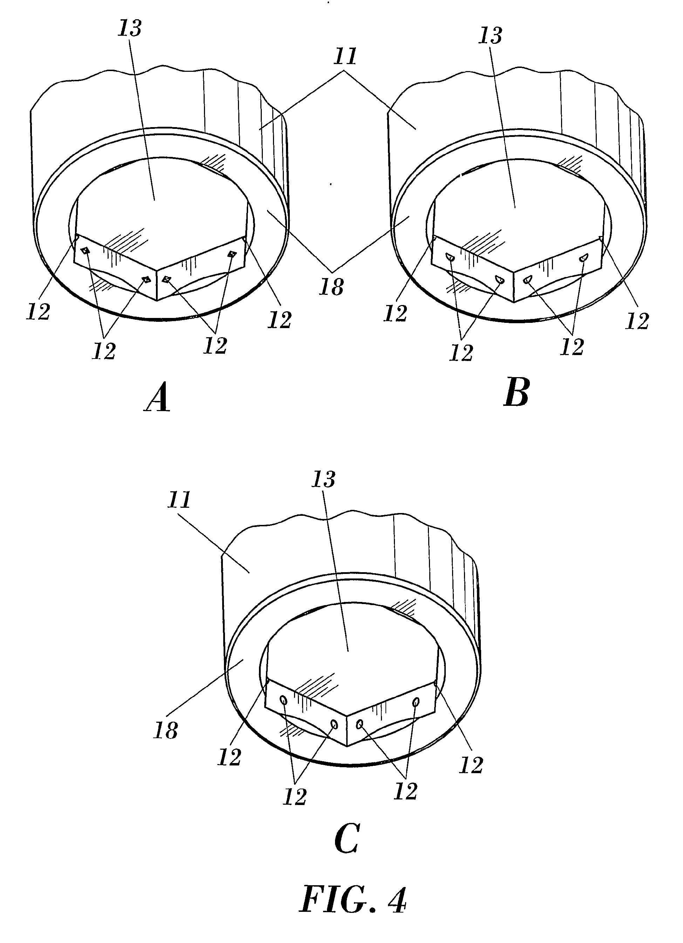

To allow fixing the dental impression-taking device (10) to the dental implant (1), once the female and male parts are coupled, the two parts have retaining means complementing one another so as to completely fix the parts of the coupled assembly. As shown in Figures 3 and 4, said retaining means consist of projections (12) configured in the inner wall or walls of the cavity (13). The details (A), (B) and (C) of Figure 4 respectively show different embodiments of the projections (12): with beveled edges, having a polygonal or angular profile; in the form of a hemisphere or semi-hemisphere, with respective semicircular or circular sector profiles, etc., among other possible designs fulfilling the function of ensuring a stable retention between the coupled components of the assembly.

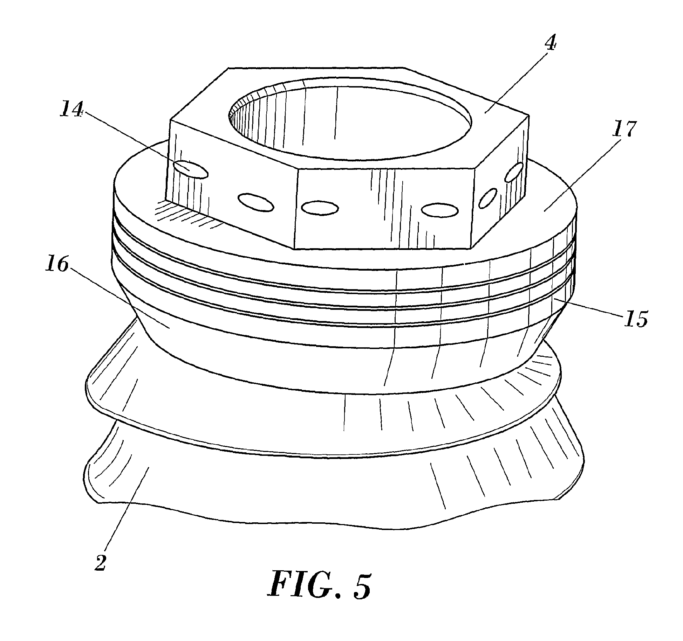

In correspondence, as shown in Figures 3 and 5, the male part of the dental implant (1) has recesses (14) adapted in shape and dimensions so as to allow inserting said projections (12), a pair of recesses (14), for example, being arranged in a number and position identical to the projections (12) themselves for each corresponding pair of projections (12), which recesses are located in each outer or inner face or wall of the hexagon in a logical manner according to whether it is the boss (4) or the cavity (13) and are placed at a small distance from each edge of the hexagonal element. The location of the retaining means and their complementary means may vary, giving rise to multiple possible alternative embodiments.

Figure 5 shows the head (3) of the dental implant (1) in more detail, formed by a cylindrical portion (15) from which the boss (4) emerges and at the lower part it extends in an inverted frustoconical portion (16) with which the threaded body (2) is joined. The recesses (14) are made in the boss (4) acting as the male part, which recesses are located in the side faces as described previously, but they may also be located in the outer edges of said boss (4), or surrounding such boss at the upper base (17) of the cylindrical portion (15), or in the outer wall of said cylindrical portion (15). The position of the recesses (14) entails the complementary shape of the projections (12) in the cavity (13) of the female part of the assembly, in this particular case, the distal part (11) of the dental impression-taking device (10).

Said distal part (11) additionally has at least one side groove (21), two opposite grooves in the example, to collaborate in the anti-rotation function inside the impression material, as a complement together with the two discs (20 and 20') for the lack of mobility in the vertical movement of the dental impression-taking device (10).

The invention has been described according to several preferred embodiments thereof, but persons skilled in the art can understand that the multiple variations may be introduced and combined within the object of the claimed invention. All the details and accessory elements, as well as the shapes, dimensions and the materials of the dental implant-impression-taking device assembly which has been described herein could be suitably replaced with other equivalent techniques without departing from the scope of the claims included below.

## Claims

1. A dental implant and impression-taking device assembly to record by means of an impression material the position and orientation of a dental implant (1) placed in one of the mandibles of a patient, said dental implant (1) comprising a head (3) configured for coupling with a distal part (11) of a dental impression-taking device (10), **characterized in that** said coupling is by tonguing and grooving, retaining means having been provided in a female part of the assembly and complementary retaining means having been provided in a male part of the assembly to fix their coupling and prevent vertical movement between the coupled parts.

2. An assembly according to claim 1, **characterized in that** the male part is in the dental implant (1) and the female part is in the dental impression-taking device (10).

3. An assembly according to claim 1, **characterized in that** the male part is in the dental impression-taking device (10) and the female part is in the dental implant (1).

4. An assembly according to claims 2 or 3, **characterized in that** the male part comprises a boss (4) configured by revolution and the female part comprises a cavity (13) adapted in shape and dimensions to said male part.

5. An assembly according to claim 4, **characterized in that** the boss (4) is prismatic.

6. An assembly according to claim 5 ,**characterized in that** the boss (4) has a hexagonal section.

7. An assembly according to claim 4, **characterized in that** the boss (4) is cylindrical.

8. An assembly according to the previous claims, **characterized in that** the retaining means of the female part consist of projections (12) adapted to be inserted in recesses (14) forming the complementary retaining means of the male part.

9. An assembly according to claim 8, **characterized in that** the projections (12) have a profile selected from a polygonal, semicircular and circular sector profile.

10. An assembly according to claims 4 to 9, **characterized in that** the retaining means are located in at least one inner wall of the cavity (13) and the complementary retaining means are located in at least one outer wall of the boss (4).

11. An assembly according to claims 4 to 10, **characterized in that** the male part additionally comprises a cylindrical portion (15) joined at its upper base (17) to the boss (4).

12. An assembly according to claim 11, **characterized in that** the retaining means are located in a peripheral surface (18) with respect to the cavity (13) and the complementary retaining means are located in the upper base (17) of the cylindrical portion (15).

13. An assembly according to claims 11 or 12, **characterized in that** the retaining means are located in a part of the cavity (13) adapted in shape and dimensions to the cylindrical portion (15) and the complementary retaining means are located in at least one outer wall of said cylindrical portion (15).

14. An assembly according to any of the previous claims, **characterized in that** the dental impression-taking device (10) has a proximal part (19) adapted to retain the impression material.

15. An assembly according to claim 14, **characterized in that** the distal part (11) and the proximal part (19) have an essentially cylindrical configuration with one and the same axis of revolution (A).

16. An assembly according to claim 15, **characterized in that** the proximal part (19) has a smaller diameter than the distal part (11).

17. An assembly according to any of claims 14 to 16, **characterized in that** the proximal part (19) comprises two discs (20, 20') with a larger diameter than the distal part (11) and perpendicular to the axis of revolution (A), spaced to prevent the vertical movement of the dental impression-taking device (10) in the impression material.

18. An assembly according to claim 17, **characterized in that** the discs (20, 20') have at least one planar side face forming an anti-rotation complement for the dental impression-taking device (10) inside the impression material.

19. An assembly according to any of the previous claims, **characterized in that** the distal part (11) has at least one side groove (21) forming an anti-rotation complement for the dental impression-taking device (10) inside the impression material.

20. An assembly according to any of the previous claims, **characterized in that** the dental impression-taking device (10) is made of plastic.
